# EUROPEAN PATENT APPLICATION

(11) **EP 3 977 902 A1**
(43) Date of publication of application: **06.04.2022**
(21) Application number: 20815108.4
(22) Date of filing: 19.05.2020
(51) Int. Cl.: A47J 37/06

(54) **LIGHT ROCKER ARM FOR CERAMIC GRILL**

(30) Priority: 29.05.2019 CN 201910456378
(71) Applicant: YIXING MEIKAIDE STOVE CO., LTD., Jiangsu 214200 (CN)
(72) Inventor: SHAO, Chundie, Jiangsu 214222 (CN)
(74) Representative: Schneiders & Behrendt Bochum
(86) International application number: PCT/CN2020/091007
(87) International publication number: WO 2020/238695

(57) **Abstract**

Here, a ceramic roaster-purpose light rocker arm is disclosed, which belongs to technology field of ceramic roaster and includes casing, rotation shaft, roaster body and cover. Both ends of rotation shaft penetrates the casing and are connected with rotation shaft and casing. The inner wall of the casing is movably connected with lower anchor chain foot and the lower anchor chain foot is fixed with roaster body. The inner wall of casing through the shaft is movably connected with upper anchor chain foot. The inner wall of upper anchor chain foot is connected with rail shaft. The inner wall of the upper anchor chain foot is fixed with retainer and the surface of the rotation shaft is provided with torsion spring. The torsion spring provides a buffer force, which makes the roaster cover opened merely with a finger-force. During roasting in the open, even the cover is blown down by heavy wind, under the action of the torsion spring, the cover will neither clamp hands nor injury people.

## Description

### TECHNICAL FIELD

This invention is involved with the field of technology of ceramic roaster, especially is involved with a type of ceramic roaster-purpose light rocker arm.

### BACKGROUND ART

The roaster is a type of roasting device and may be used to roast mutton shashlik and meat. The roaster is divided into 3 types: charcoal roaster, gas roaster and electric roaster, of which, the gas roaster and electric roaster are highly welcome due to freedom of oil-smog and contamination. The common-marketed roasters include the apple roaster, rectangular roaster and light roaster.

Currently, the ceramic roaster is a wide-used roasting device, and generally the cover of the existing ceramic roaster is turned over through the light rocker arm. The cover is difficult to turn over due to its rather big weight. Frequent use of the light rocker arm results in decrease of the pulling force of spring, and only through tightening the adjustment screw may the pulling force of the rocker arm be ensured.

### SUMMARY

### 1. The technical problems to be solved

For solving the problems existing in prior art, this invention aims to provide a type of ceramic roaster-purpose light rocker arm, which makes the cover opened easily and lightly. It eliminates the weakness that the cover is difficult to turn over due to its rather big weight. Frequent use of the light rocker arm results in decrease of the pulling force of spring, and only through tightening the adjustment screw may the pulling force of the rocker arm be ensured.

### 2. Technical scheme

In order to solve the above-mentioned problems, in this invention the following technical scheme is adopted.

A type of ceramic roaster-purpose light rocker arm includes casing, rotation shaft, roaster body and cover. Both ends of the said rotation shaft penetrate the casing, and the rotation shaft is rotationally connected with the casing. The inner wall of the said casing is movably connected with the lower anchor chain foot, and the lower anchor chain foot is fixed and connected with roaster body. The inner wall of the said casing is rotationally connected with upper anchor chain foot through rotation shaft. The inner wall of the said upper anchor chain foot is fixed and connected with rail shaft, the inner wall of the said upper anchor chain foot is connected with retainer. The surface of the said rotation shaft is provided with torsion spring, the top end of the said torsion spring is movably connected with retainer. The thread on one side of the said casing is threaded with screw, and the said screw penetrates the casing and is rotationally connected with a push plate. The lower end of the said torsion spring is movably connected with the push plate. One side of the casing is provided with a guard.

Preferentially, the surface of the rotation shaft is inserted with two retainers, and the said retainers are movably connected with the casing.

Preferentially, two lower anchor chain feet are provided.

Preferentially, three torsion springs are provided and they all are set between two retainers.

Preferentially, one side of the said push plate is fixed and connected with a rotation base, and the inner wall of the rotation base is provided with a bearing. The inner edge of the said bearing is inserted with the screw, one side of the push plate is fixed and connected with a limit rod, and the said limit rod penetrates the casing and extends to outside of the casing.

Preferentially, one side of the said casing is provided with a hinge, the guard is rotationally connected with the casing through the hinge. The inner edge of the said guard is fixed and connected with the first magnetic stripe, one side of the casing is fixed and connected with the second magnetic stripe, and both the magnetic stripes are connected under magnetic action.

Preferentially, one side of the lower anchor chain foot is provided with a threaded hole, the thread on one side of the casing is connected with a bolt, and the said bolt is threaded through the threaded hole.

### 3. Beneficial effects

Compared with the prior art, this invention has the following merits:
(1) By this scheme, the cover is lightly opened only by slight pulling of the cover with hand, which under the action of the torsion spring provides the cover a buffer force to render it an upwards moving trend. The force intensity may be adjusted with the screw built in the guard. At adjustment, rotating the screw will move the push plate so as to increase the torsion force of the torsion spring. The closer the screw is to the rail shaft, the bigger is the force exerted by torsion spring, and the easier is opening of the cover, which makes it possible to open the cover merely with a finger during the roasting, even roasting in the open the cover is blown down by heavy wind, under the action of the torsion spring, the cover will neither clamp hands nor injure people. It eliminates the weakness that the cover is difficult to turn over due to its rather big weight. Frequent use of the light rocker arm results in decrease of the pulling force of spring, and only through tightening the adjustment screw may the pulling force of the rocker arm be ensured.
(2) The retainer plays a role to limit the rotation shaft, prevent the rotation shaft from deviation from the casing, and avoid separation of the rotation shaft from the casing.
(3) Three torsion springs are provided to increase the force-exerting points of the torsion spring, render the upper anchor chain foot a higher buffer force, and facilitate opening of cover.
(4) The rotation base makes the screw rotate much smoothly, and under the action of the limit rod, it prevents the push plate from inclination or deviation, which makes the adjustment process of the position of the push plate much stable and the use much safe.
(5) The hinge is used to turn over the guard and facilitates the adjustment of the screw. Under magnetic action of the first magnetic stripe and the second magnetic stripe, the guard is not liable to turn over, and thus the use is much reliable.

### BRIEF DESCRIPTION OF THE DRAWINGS

Fig. 1 is the schematic structural diagram of this invention.
Fig. 2 is the schematic structural diagram of the casing of this invention.
Fig. 3 is the schematic structural diagram of the guard of this invention.
Fig. 4 is the side view of the casing of this invention casing.
Fig. 5 is the explosion view of the casing of this invention.
Fig. 6 is enlarged view of A in Fig 5 of this invention.

Notes to symbols in pictures:
1. Casing; 2. Rotation shaft; 3. Roaster body; 4. Cover; 5. Lower anchor chain foot; 6. Retainer; 7. Upper anchor chain foot; 8. Retainer; 9. Torsion spring; 10. Screw; 11. Push plate; 12.Rotation base; 13. Guard; 14. Rail shaft; 15. Limit rod

### DETAILED DESCRIPTION OF THE EMBODIMENTS

In the below section, the technical scheme used in implementation examples of this invention is clearly and completely described in combination with pictures hereof. Obviously, the described implementation examples are merely a part of implementation examples of this invention and are not the entire implementation examples. All other implementation examples that the common technicians in this field may obtain without making any creative labor belong to the protection range of this invention.

It shall be noted that in the description of this invention the terms showing the orientation or position relation such as "Upper" , "Lower", "Inside", "Outside", and "Top/bottom end" are based on the orientation or position relation indicated by the attached pictures, are merely for easy and simple description of this invention and do not indicate or imply that the indicated unit or element must have specific orientation, specific orientation structure and operation, hence they shall not be understood as the restriction to this invention. In addition, the term "first" and "second" are merely for description purpose and shall not be understood as the indicated or implied relative importance.

It shall be noted that in the description of this invention, unless otherwise clearly specified or limited, the terms "Installed", "Provided with", "Inserted/connected" and "Connected" shall be understood in a wide sense, for example term "connection" may be fix-connection, detachable connection, integral connection, mechanical connection, electric connection, direct connection, indirect connection through intermediate, or inner connection between two elements. The common technicians in this field may understand the meanings of the above-mentioned terms in this invention as per the specific conditions.

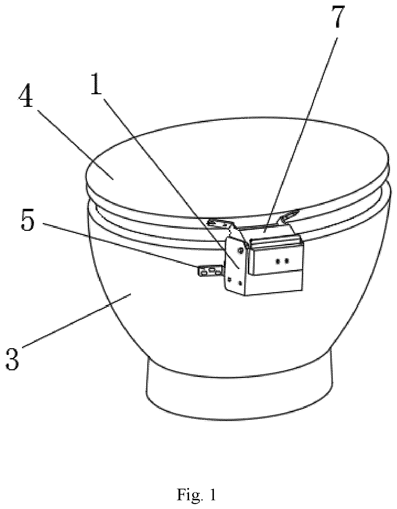

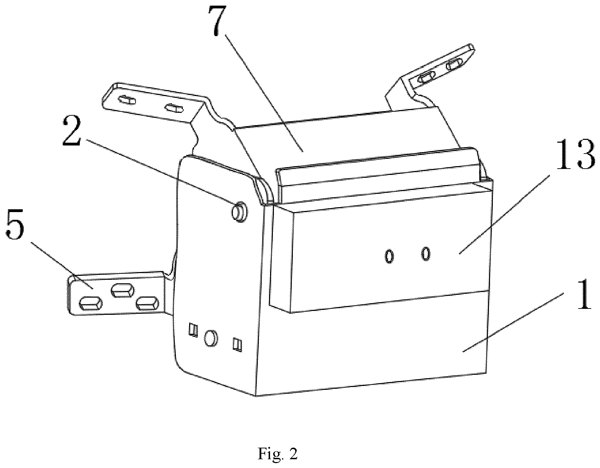

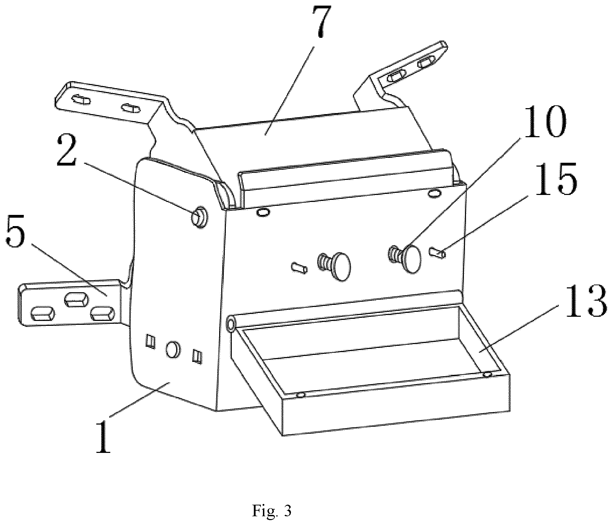

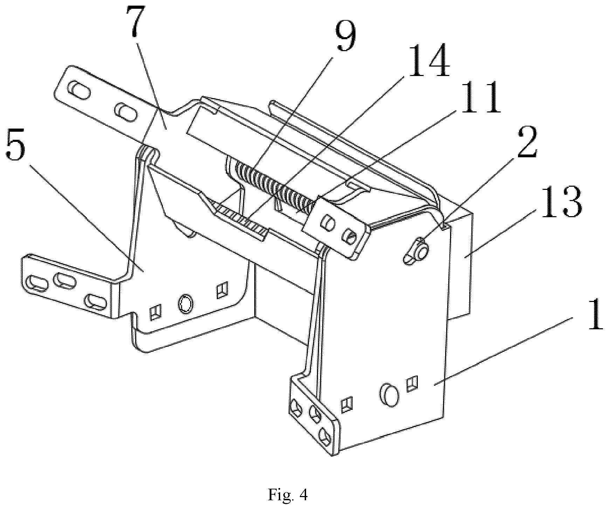

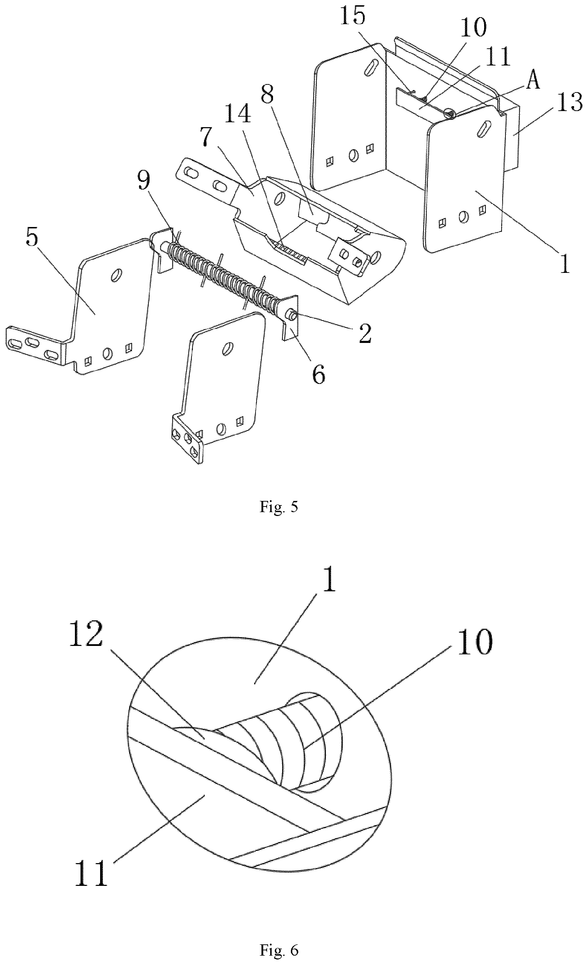

On reference of Fig. 1 to Fig. 6, a type of ceramic roaster-purpose light rocker arm includes casing 1, rotation shaft 2, roaster body 3 and cover 4, both ends of rotation shaft 2 penetrate casing 1, and rotation shaft 2 and casing 1 are rotationally connected. The inner wall of casing 1 is movably connected with lower anchor chain foot 5, and lower anchor chain foot 5 and roaster body 3 are fixed and connected. The inner wall of casing 1 is rotationally connected with upper anchor chain foot 7 through rotation shaft 2, and the inner wall of upper anchor chain foot 7 is fixed and connected with rail shaft 14. The inner wall of upper anchor chain foot 7 is fixed and connected with retainer 8, and the surface of rotation shaft 2 is inserted with torsion spring 9, and the top end of torsion spring 9 is movably connected with retainer 8. One side of casing 1 is connected with screw 10, and screw 10 penetrates casing 1 and is rotationally connected with push plate 11. The lower end of torsion spring 9 is movably connected with push plate 11, and one side of casing 1 is provided with guard 13.

Further, the surface of rotation shaft 2 is inserted with two retainers 6, and retainer 6 is movably connected with casing 1. Retainer 6 plays a role to limit rotation shaft 2, prevent rotation shaft 2 from deviation from casing 1, and avoid separation of rotation shaft 2 from the casing 1.

Further, three torsion springs 9 are provided, and all the three torsion springs 9 are set between two retainers 6. Provision of three torsion springs will increase the force-exerting points of torsion spring 9, render the upper anchor chain foot 7 a higher buffer force, and facilitate opening of cover 4.

Further, one side of push plate 11 is fixed and connected with rotation base 12, the inner wall of rotation base 12 is provided with a bearing, the inner edge of bearing is inserted with screw 10. One side of push plate 11 is fixed and connected with limit rod 15, and limit rod 15 penetrates casing 1 and extends to outside of casing 1. The rotation base 12 makes screw 10 rotate much smoothly, and under the action of the limit rod 15, it prevents push plate 11 from inclination or deviation, which makes the adjustment process of the position of push plate 11 much stable and the use much safe.

Further, one side of casing 1 is provided with a hinge, and guard 13 is rotationally connected with casing 1 through the hinge. The inner wall of guard 13 is fixed and connected with the first magnetic stripe, one side of casing 1 is fixed and connected with the second magnetic stripe, and through magnetic connection of the both magnetic stripes, the hinge may enable guard 13 to turn over and facilitate the adjustment of screw 10. Under magnetic action of the first magnetic stripe and the second magnetic stripe, guard 13 is not liable to turn over, and thus the use is much reliable.

Further, one side of lower anchor chain foot 5 is provided with a threaded hole. The thread on one side of casing 1 is connected with a bolt, the bolt is threaded through the threaded hole to connect lower anchor chain foot 5 and casing 1. When the fixation between lower anchor chain foot 5 and casing 1 is unnecessary, the bolt may be directly detached.

Working principle: Cover 4 is lightly opened only by slight pulling of the cover 4 with hand, which under the action of the torsion spring 9 provides the cover 4 a buffer force to render the cover 4 an upwards moving trend. The force intensity may be adjusted with the screw 10 built in the guard 13. At adjustment, rotating screw 10 will move the push plate 11 so as to increase the torsion force of torsion spring 9. The closer screw 10 is to the rail shaft 14, the bigger is the force exerted by torsion spring 9, and the easier is opening of cover 4, which makes it to open the cover 4 during the roasting merely with a finger. During roasting in the open, even cover 4 is blown down by heavy wind, under the action of torsion spring 9, cover 4 will neither clamp hands nor injure people, which eliminates the weakness that cover 4 is difficult to turn over due to its rather big weight. Frequent use of the light rocker arm results in decrease of the pulling force of spring, and only through tightening the adjustment screw may the pulling force of the rocker arm be ensured.

The above-mentioned is merely the optimal implementation modes of this invention, however, which the protection-range of this invention is not merely limited to. Any equal substitution or change made by any technician familiar with this field on basis of the technical scheme and improvement idea within the technical range disclosed herein is covered within the protection range of this invention.

## Claims

1. A type of ceramic roaster-purpose light rocker arm including casing (1), rotation shaft (2), roaster body (3) and cover (4), wherein both ends of the said rotation shaft (2) penetrate casing (1), and rotation shaft (2) is rotationally connected with casing (1), wherein the inner wall of casing (1) is movably connected with lower anchor chain foot (5), and lower anchor chain foot (5) is fixed and connected with roaster body (3); the inner wall of casing (1) is rotationally connected with upper anchor chain foot (7) through rotation shaft (2); the inner wall of upper anchor chain foot (7) is fixed and connected with rail shaft (14), the inner wall of upper anchor chain foot (7) is connected with retainer (8); the surface of rotation shaft (2) is provided with torsion spring (9), the top end of torsion spring (9) is movably connected with retainer (8); the thread on one side of casing (1) is threaded with screw (10), and screw (10) penetrates casing (1) and is rotationally connected with push plate (11); the lower end of torsion spring (9) is movably connected with push plate (11), and one side of casing (1) is provided with guard (13).

2. A type of ceramic roaster-purpose light rocker arm as per Claim 1, **characterized in that** the surface of rotation shaft (2) is inserted with two retainers (6), and retainer (6) is movably connected with casing (1).

3. A type of ceramic roaster-purpose light rocker arm as per Claim 1, **characterized in that** two sets of lower anchor chain foot (5) are provided.

4. A type of ceramic roaster-purpose light rocker arm as per Claim 1, **characterized in that** three torsion springs (9) are provided, and all the three torsion springs (9) are set between two retainers (6).

5. A type of ceramic roaster-purpose light rocker arm as per Claim 1, **characterized in that** one side of push plate (11) is fixed and connected with rotation base (12), the inner wall of rotation base (12) is provided with a bearing, the inner edge of the bearing is inserted with screw (10), one side of push plate (11) is fixed and connected with limit rod (15), and limit rod (15) penetrates casing (1) and extends to outside of casing (1).

6. A type of ceramic roaster-purpose light rocker arm as per Claim 1, **characterized in that** one side of casing (1) is provided with a hinge, and guard (13) is rotationally connected with casing (1) through the hinge, the inner wall of guard (13) is fixed and connected with the first magnetic stripe, one side of casing (1) is fixed and connected with the second magnetic stripe and both the magnetic stripes are connected under magnetic action.

7. A type of ceramic roaster-purpose light rocker arm as per Claim 1, **characterized in that** one side of lower anchor chain foot (5) is provided with a threaded hole, the thread on one side of casing (1) is connected with bolt and the said bolt is connected with the threaded hole.
